# EUROPÄISCHE PATENTANMELDUNG

(11) **EP 0 805 311 A2**
(43) Veröffentlichungstag der Anmeldung: **05.11.1997**
(21) Anmeldenummer: 96120034.2
(22) Anmeldetag: 13.12.1996
(51) Int. Cl.: F24D 19/10, G05D 23/19

(54) **Regelungseinrichtung für eine Heizungsanlage**

(30) Priorität: 01.05.1996 CH 1097/96
(71) Anmelder: Landis & Gyr Technology Innovation AG, 6301 Zug (CH)
(72) Erfinder: Petak, Kurt, 6340 Baar (CH)

(57) **Zusammenfassung**

Die Erfindung betrifft ein Regelungseinrichtung für eine Heizungsanlage für Wohn- oder Geschäftsbauten, umfassend einen ein Wärmeträgermedium beheizenden Wärmeerzeuger, mindestens einen Regler zur Regelung der Temperatur des Wärmeträgermediums, Transportleitungen für das Wärmeträgermedium und eine Vielzahl von Wärmetauschern zur Abgabe der erzeugten Wärme an Räume, wobei der Durchfluß durch die Wärmetauscher mittels Stellorganen beeinflußbar ist. Sie ist dadurch gekennzeichnet, daß jedem Raum ein Fernbedienungsgerät (6) und eine Steuerbox (7) zuordenbar ist, daß das Fernbedienungsgerät (6) einen Raumtemperaturfühler (14) und einen Sollwertsteller (15) für die Raumtemperatur enthält, daß das Fernbedienungsgerät (6) aus der Abweichung zwischen Istwert und Sollwert der Raumtemperatur ein Stellsignal für Stellorgane (5) an Wärmetauschern (3) erzeugt, daß dieses Stellsignal mittels einer Sendeeinrichtung (9) drahtlos vom Fernbedienungsgerät (6) zur Steuerbox (7) übertragen wird. Die Steuerbox (7) ist mit einem Netzanschlußkabel (12) an die übliche Netzstromversorgung anschließbar und weist einen Empfänger (10) für das Stellsignal auf. An die Steuerbox (7) sind elektrisch steuerbare Antriebe für die Stellorgane (5) der Wärmetauscher (3) mittels einer im Raum frei verlegbaren Drahtverbindung (13) steckbar anschließbar. Mit dieser Einrichtung läßt sich eine bestehende, fest installierte Heizungsregelung zu einer Einzelraumregelung ergänzen, ohne daß Eingriffe in die Festinstallation nötig sind. Dies ist vor allem für Mieter von Wohnungen interessant.

## Beschreibung

Die Erfindung bezieht sich auf eine Regelungseinrichtung für eine Heizungsanlage gemäß dem Oberbegriff des Anspruchs 1.

Solche Regelungseinrichtungen für eine Heizungsanlage eignen sich beispielsweise zum Betrieb von Warmwasserheizungen in Wohnungen und Nichtwohnbauten.

Es ist eine Regelungseinrichtung für eine Heizungsanlage dieser Art bekannt (DE-A1 42 21 094), bei der von einem Fernbedienungsgerät drahtlos auf Thermostatventilen zugeordnete Signalempfänger eingewirkt wird.

Es ist auch bekannt (DE-A1 33 15 164), die Technik der Befehlsübermittlung von einem Raumregler über Funk an ein Ventil mit elektrisch betätigtem Antrieb anzuwenden. Wenn dabei sowohl Raumregler als auch Ventilantrieb batteriegespeist sind, kann auf jegliche Verdrahtung verzichtet werden.

Eine große Zahl von beheizbaren Objekten wie Wohn- und Geschäftsbauten weist witterungsgeführte Heizungsregelungen auf, die allenfalls zusätzlich noch eine Berücksichtigung der Temperatur eines Testraumes beinhalten, wobei der Testraum meist der Hauptwohnraum ist.

Bei den vorgenannten Heizungsregelungen sind wesentliche Teile der Einrichtung fest installiert und gehören bei Mietobjekten dem Eigentümer des Objekts. Der Mieter darf entweder in diese Einrichtung überhaupt nicht eingreifen, oder er ist gezwungen, bei Ende des Mietverhältnisses den ursprünglichen Zustand wieder herzustellen. Hat der Mieter den Wunsch, eine Einzelraumregelung zu verwirklichen, so müßte ein solcher Eingriff in die feste Installation erfolgen.

Der Erfindung liegt die Aufgabe zugrunde, eine Vorrichtung zu schaffen, mit der sich eine bestehende, fest installierte Heizungsregelung zu einer Einzelraumregelung ergänzen laßt, ohne daß dabei ein Eingriff in die Festinstallation nötig ist.

Die genannte Aufgabe wird erfindungsgemäß durch die Merkmale des Anspruchs 1 gelöst. Vorteilhafte Ausgestaltungen ergeben sich aus den abhängigen Ansprüchen.

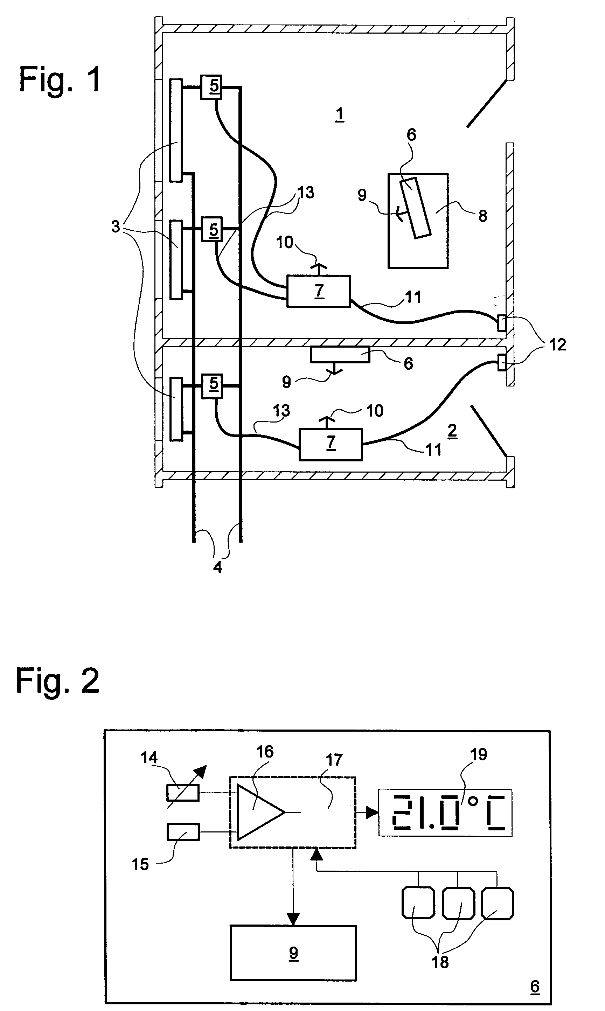

Nachfolgend wird ein Ausführungsbeispiel der Erfindung anhand der Zeichnung näher erläutert.
- Es zeigen:: Fig. 1 eine Anordnung von Teilen einer Regeleinrichtung in Räumen,
Fig. 2 einen schematischen Aufbau eines Fernbedienungsgeräts und
Fig. 3 einen schematischen Aufbau einer Steuerbox.

In der Fig. 1 bedeutet 1 einen ersten Wohnraum, während mit 2 ein zweiter Wohnraum bezeichnet ist. Jeder der Wohnräume 1, 2 weist mindestens einen Wärmetauscher 3 zur Abgabe von Wärmeenergie an den Raum auf. In den meisten Fällen sind solche Wärmetauscher 3 als Radiatoren ausgebildet, deren Größe und Zahl sich nach den Gegebenheiten der Heizungsanlage und der Räume richtet. Jeder Wärmetauscher 3 ist über Transportleitungen 4, beispielsweise eine Vorlauf- und eine Rücklaufleitung, an einen nicht dargestellten Wärmeerzeuger angeschlossen. Nicht dargestellt ist außerdem ein Regler zur Regelung der Temperatur eines Wärmeträgermediums, das vom Wärmeerzeuger beheizt wird und in diesen Transportleitungen 4 zirkuliert.

An jedem der Wärmetauscher 3 ist ein Stellorgan 5 angebracht, mit dessen Hilfe sich der Durchfluß des Wärmeträgermediums durch den Wärmetauscher 3 beeinflussen läßt. Diese Stellorgane 5 bestehen aus einem Ventil und einem dieses Ventil beeinflussenden Stellantrieb. Der Stellantrieb kann bei Heizungsanlagen nach dem Stand der Technik beispielsweise ein einfacher, von Hand zu betätigender Drehknopf sein. Üblich sind auch Thermische Antriebe, die im Hinblick auf die Temperatur selbstregulierend wirken. Beim Stand der Technik existieren Ventile, die so beschaffen sind, daß sich deren Antriebe sehr leicht auswechseln lassen.

Gemäß der Erfindung sind die Antriebe elektrisch steuerbar. Im Rahmen der Erfindung können die Antriebe elektromotorisch oder elektrothermisch wirken. Im erstgenannten Fall ist ein Motor enthalten, der in Öffnungs- oder Schließrichtung steuerbar ist. Im zweitgenannten Fall kann ein thermischer Antrieb vorhanden sein, der einerseits selbsttätig den Durchfluß durch den Wärmetauscher steuert, andererseits aber auch von außen steuerbar ist. So kann beispielsweise ein elektrisch ansteuerbares Heizelement enthalten sein.

Erfindungsgemäß sind jedem Raum 1, 2 ein Fernbedienungsgerät 6 und eine Steuerbox 7 zugeordnet. Das Fernbedienungsgerät 6 ist beispielsweise batteriegespeist, so daß es ohne Rücksicht auf eine Verkabelung innerhalb der Räume 1, 2 beliebig plaziert werden kann. So zeigt die Fig. 1, daß das Fernbedienungsgerät 6 im Raum 1 auf einem Tisch 8 steht, während es im Raum 2 an der Wand des Raumes 2 befestigt ist.

Erfindungsgemäß weist das Fernbedienungsgerät 6 eine Sendeeinrichtung 9 auf, mit deren Hilfe Stellsignale drahtlos verbreitet werden können. Die jedem Raum 1, 2 zugeordnete Steuerbox 7 weist eine Empfangseinrichtung 10 auf, mit der die vom Fernbedienungsgerät 6 drahtlos gesendeten Stellsignale empfangen werden können. Jede Steuerbox 7 ist mittels eines Netzanschlußkabels 11 an eine Steckdose 12 der üblichen Netzstromversorgung anschließbar.

Die Steuerbox 7 weist außerdem Anschlüsse für Drahtverbindungen 13 auf, über die die Steuerbox 7 elektrisch auf die an die Steuerbox 7 angeschlossenen Antriebe der Stellorgane 5 einwirkt. Diese Drahtverbindungen 13 sind im Raum 1, 2 frei verlegbar.

In der Fig. 2 ist der Aufbau eines Fernbedienungsgeräts 6 schematisch dargestellt. Dieses enthält einen Raumtemperaturfühler 14 und einen Sollwertsteller 15. Am Sollwertsteller 15 kann der Benutzer den gewünschten Sollwert der Raumtemperatur einstellen. Der vom Raumtemperaturfühler 14 ermittelte Istwert der Raumtemperatur wird von einem Vergleicher 16 mit dem Sollwert verglichen. Der Vergleicher 16 ist angesichts der zur Verfügung stehenden Digitaltechnik beispielsweise Teil eines Digitalsystems 17, das in bekannter Weise aus einem Prozessor und einem Speicher besteht. Auch der Sollwertsteller 15 kann Bestandteil dieses Digitalsystems 17 sein, wobei dann die Einstellung des Sollwertes mit Hilfe von Bedientasten 18 geschieht, die ohnehin vorhanden sind und mit dem Digitalsystem 17 zusammenwirken. An das Digitalsystem 17 angeschlossen ist weiterhin eine Anzeigevorrichtung 19, beispielsweise ein LCD-Display. Das Fernbedienungsgerät 6 enthält weiterhin die schon bei der Beschreibung der Fig. 1 erwähnte Sendeeinrichtung 9.

Im Fernbedienungsgerät 6 ist eine nicht dargestellte Batterie enthalten, die die elektrisch funktionierenden Teile des Fernbedienungsgeräts 6 mit der nötigen Spannung und mit Strom versorgt. Soll die Verwendung einer Batterie vermieden werden, so ist alternativ der Einsatz einer externen Stromversorgung denkbar. So könnte ein in einen Stecker integriertes Netzteil Anwendung finden, wofür der bekannte Stand der Technik Vorbilder bietet. Als eine weitere Alternative wäre die Anwendung von Solarzellen zusammen mit einem großzügig bemessenen Kondensator denkbar.

Nicht dargestellt sind weitere, für das Wesen der Erfindung belanglose Teile des Fernbedienungsgeräts 6. So kann das Fernbediengerät 6 beispielsweise einen Empfänger für die Signale eines der bekannten Langwellen-Zeitsenders enthalten, mit denen eine interne Uhr gesteuert wird, die im Zusammenhang mit dem Ablauf von Zeitprogrammen benötigt wird. So können beispielsweise unterschiedliche Sollwerte der Raumtemperatur verschiedenen Zeitperioden zugeordnet werden, wie dies allgemein bekannt ist.

Aus der Differenz zwischen dem Istwert und dem Sollwert der Raumtemperatur generiert das Digitalsystem 17 ein Stellsignal für die Antriebe der Stellorgane 5. Dieses Stellsignal wird der Sendeeinrichtung 9 zugeführt und von dieser drahtlos ausgesendet.

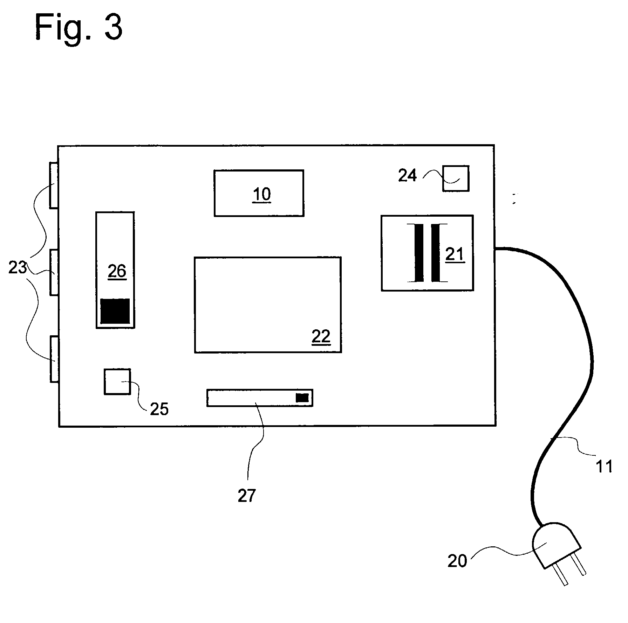

Empfangbar ist dieses Signal durch die Steuerbox 7, deren Einzelheiten in der Fig. 3 dargestellt sind. Mittels eines Netzanschlußkabels 11 läßt sich die Steuerbox 7 an die bestehende übliche Netzstromversorgung anschließen, weshalb das Netzanschlußkabel 11 an seinem freien Ende mit einem Netzstecker 20 versehen ist. Innerhalb der Steuerbox 7 befindet sich ein Transformator 21, der im Hinblick auf die vorherrschenden Netzspannungen beispielsweise von 230 V auf 115 V umschaltbar ist. Dieser Transformator 21 erzeugt eine Kleinspannung von beispielsweise 24 V, die gleichzeitig die Betriebsspannung für die Antriebe der Stellorgane 5 (Fig. 1) ist. Die Verwendung von Kleinspannung für diesen Zweck hat den Vorteil, daß an die Steckverbinder und an die Drahtverbindungen 13 (Fig. 1) keine hohen Anforderungen gestellt werden müssen.

Die Steuerbox 7 weist die schon zuvor erwähnte Empfangseinrichtung 10 auf, die ebenfalls durch die Kleinspannung betrieben wird. Das Signal der Empfangseinrichtung 10 gelangt auf eine Schalteinrichtung 22. Diese Schalteinrichtung 22 besitzt Ausgänge, die zu Steckbuchsen 23 führen, an die die mit passenden Steckern versehenen Drahtverbindungen 13 anschließbar sind.

Die Steuerbox 7 weist vorteilhaft auch noch zwei Kontrollampen auf, nämlich eine erste Kontrollampe 24, mit der das Vorhandensein der Netzspannung angezeigt wird, sowie eine zweite Kontrollampe 25, mit der das Zustandekommen der drahtlosen Verbindung vom Fernbedienungsgerät 6 zur Steuerbox 7 anzeigbar ist.

Gezeigt ist in der Fig. 3 zusätzlich ein erster Schalter 26, beispielsweise ein Schiebeschalter, der dem Ein- und Ausschalten der Steuerbox 7 dient. Zusätzlich kann ein Wahlschalter 27 vorhanden sein. Dieser Wahlschalter 27 dient beispielsweise der Wahl eines von mehreren möglichen Übertragungskanälen und ist, wenn diese Option vorgesehen ist, auch beim Fernbedienungsgerät 6 (Fig. 2) vorhanden, dort aber nicht dargestellt. Mit der Möglichkeit, verschiedene Übertragungskanäle einstellen zu können, läßt sich das Problem der Beeinflussung von in benachbarten Räumen 1, 2 angeordneten Einrichtungen der beschriebenen Art lösen.

Der Schalter 26 kann alternativ auch auch Schalter zum Ein- und Ausschalten der Fernbedienungswirkung gestaltet sein. In einer ersten Stellung wirkt dabei die Steuerbox 7 wie zuvor beschrieben, wird also vom Fernbedienungsgerät 6 her gesteuert. In einer zweiten und einer dritten Stellung ist die Beeinflussung durch das Fernbedienungsgerät 6 abgeschaltet, so daß die Steuerbox 7 autonom betreibbar ist. In der zweiten Stellung steuert die Steuerbox 7 die angeschlossenen Stellorgane 5 dauernd in die Stellung AUF und in der dritten Stellung in die Stellung ZU. Damit ist eine manuelle Steuerung durch den Benutzer möglich.

Unabhängig davon, in welcher Weise die Temperatur des Wärmeträgermediums gesteuert oder geregelt wird, kann mit der vorstehend in den Fig. 1 bis 3 beschriebenen Einrichtung eine Raumtemperaturregelung verwirklicht werden. Die beschriebene Einrichtung funktioniert wie folgt.

Aufgrund des Vergleichs von Sollwert und Istwert der Raumtemperatur, den der Vergleicher 16 vornimmt, indem er den vom Sollwertsteller 15 bereitgestellten Sollwert mit dem vom Raumtemperaturfühler 14 ermittelten Istwert vergleicht, wird im Digitalsystem 17 in bekannter Art und Weise ein Stellsignal für das Stellorgan 5 generiert. Mit diesem Stellsignal wird die Sendeeinrichtung 9 beaufschlagt, die sodann ein entsprechendes Signal aussendet. Dieses Signal ist durch die Steuerbox 7 empfangbar. In der Steuerbox 7 wird das Signal so verarbeitet, daß das eigentliche Stellsignal für das Stellorgan 5 wiedergewonnen wird. Von der Steuerbox 7 gelangt nun ein entsprechender Stellbefehl über die Drahtverbindung 13 direkt zum Stellorgan 5. Dadurch wird das Stellorgan 5 betätigt und zwar entsprechend dem jeweiligen Stellsignal entweder in Öffnungsrichtung oder in Schließrichtung. Das Betätigen in Öffnungsrichtung erfolgt dann, wenn der Istwert der Raumtemperatur Kleiner ist als der Sollwert der Raumtemperatur, und in Schließrichtung entsprechend, wenn der Istwert der Raumtemperatur größer ist als der Sollwert der Raumtemperatur. Dabei kommen dem Fachmann bekannte Regelalgorithmen zur Anwendung.

Damit ein Mieter von Räumlichkeiten die im Mietobjekt vorhandene Heizungsregelung zu einer Raumtemperaturregelung ausbauen kann, benötigt er für jeden zu regelnden Raum 1, 2 ein Fernbedienungsgerät 6, eine Steuerbox 7 und eine Anzahl von elektrischen Antrieben für die Stellorgane 5, wobei deren Zahl der Zahl der im Raum 1,2 vorhandenen Wärmetauscher 3 entspricht. Um dem Interessenten die Umrüstung einfach zu gestalten, ist es vorteilhaft, wenn die entsprechenden Teile in fertigen Abpackungen beispielsweise in Do-It-Yourself-Handelsgeschäften angeboten werden. Eine erste Abpackung enthält dabei je ein Fernbedienungsgerät 6 und eine Steuerbox 7 mit fertig konfektioniertem Netzanschlußkabel 11 und einen elektrischen Antrieb für ein Stellorgan 5 samt Drahtverbindung 13. Eine zweite Abpackung enthält einen elektrischen Antrieb für ein Stellorgan 5 mit Drahtverbindung 13. Für jeden Raum 1, 2 kann somit der Interessent eine der erstgenannten Abpackungen erwerben, für Räume 1, 2 mit mehr als einem Wärmetauscher 3 je eine der zweitgenannten Abpackungen für jeden zusätzlichen Wärmetauscher 3 eines Raumes 1, 2.

In den Fig. 1 bis 3 ist die erfindungsgemäße Vorrichtung schematisch gezeigt. Für die apparative Ausgestaltung bieten sich dem Fachmann viele verschiedene Möglichkeiten. Das gilt beispielsweise auch für das Medium zur drahtlosen Übertragung zwischen dem Fernbedienungsgerät 6 und der Steuerbox 7. Im Rahmen der Erfindung kann hier die Verwendung von Ultraschall oder Infrarotlicht ebenso in Frage kommen wie die Verwendung von Funkwellen. Die Ausgestaltung kann auch in der Weise unterschiedlich sein, ob als Stellorgane 5 solche mit stetiger Verstellmöglichkeit oder einfache AUF/ZU-Ventile Verwendung finden. Es ist vorteilhaft, wenn das Fernbedienungsgerät 6 in der Weise programmierbar ist, daß mittels der Bedientasten 18 einstellbar ist, ob in Verbindung mit dem Fernbedienungsgerät 6 Stellorgane 5 mit stetiger Verstellmöglichkeit oder einfache AUF/ZU-Ventile verwendet werden. Durch diese Programmierung werden unterschiedliche Stellsignale generiert. Es ist deshalb vorgesehen, daß das Digitalsystem 17 entsprechenden Programmcode für beide Regelungsarten enthält, von denen jeweils eines aktiviert wird. Dadurch wird erreicht, daß es keine unterschiedlichen Varianten von Fernbedienungsgerät 6 und Steuerbox 7 braucht, um Drosselorgane 5 verschiedener Art ansteuern zu können.

Im Hinblick darauf, daß das Fernbedienungsgerät 6 batteriebetrieben sein kann, wird der Fachmann eine möglichst stromsparende Ausgestaltungsform wählen. So kann auch die Ausgestaltung der drahtlosen Übertragung mit entsprechenden Techniken Verwendung finden. Vorteilhaft kann es auch sein, eine Zwei-Wege-Kommunikation vorzusehen. Damit kann beispielsweise erreicht werden, daß das Fernbedienungsgerät 6 sich in den Stand-By-Modus schaltet, wenn es von der Steuerbox 7 nicht ein periodisches Signal über deren Betrieb empfängt. Damit wird erreicht, daß das Fernbedienungsgerät 6 nicht aktiv bleibt, wenn die Steuerbox 7 nicht in Betrieb ist, wie zuvor erwähnt in eine manuelle Betriebsart geschaltet oder gar nicht vorhanden ist. Letztere Möglichkeit ist schon deshalb in Betracht zu ziehen, weil die Steuerbox 7 beliebig im Raum 1, 2 plazierbar, also auch entfernbar ist. Vorteilhaft kann es daher auch sein, auf der Anzeigevorrichtung 19 des Fernbediengeräts 6 (Fig. 2) die Umschaltung und/oder Außerbetriebsetzung der Steuerbox 7 anzuzeigen.

## Patentansprüche

1. Regelungseinrichtung für eine Heizungsanlage für Wohn- oder Geschäftsbauten, umfassend einen ein Wärmeträgermedium beheizenden Wärmeerzeuger, mindestens einen Regler zur Regelung der Temperatur des Wärmeträgermediums, Transportleitungen für das Wärmeträgermedium und eine Vielzahl von Wärmetauschern zur Abgabe der erzeugten Wärme an Räume, wobei der Durchfluß durch die Warmetauscher mittels Stellorganen beeinflußbar ist, dadurch gekennzeichnet,
a) daß jedem Raum ein Fernbedienungsgerät (6) und eine Steuerbox (7) zuordenbar ist,
b) daß das Fernbedienungsgerät (6) einen Raumtemperaturfühler (14) enthält,
c) daß das Fernbedienungsgerät (6) einen Sollwertsteller (15) für die Raumtemperatur enthält,
d) daß das Fernbedienungsgerät (6) aus der Abweichung zwischen Istwert und Sollwert der Raumtemperatur ein Stellsignal für Stellorgane (5) an Wärmetauschern (3) erzeugt,
e) daß dieses Stellsignal mittels einer Sendeeinrichtung (9) drahtlos vom Fernbedienungsgerät (6) zur Steuerbox (7) übertragen wird,
f) daß die Steuerbox (7) mit einem Netzanschlußkabel (12) an die übliche Netzstromversorgung anschließbar ist,
g) daß die Steuerbox (7) einen Empfänger (10) für das Stellsignal aufweist,
h) daß an die Steuerbox (7) elektrisch steuerbare Antriebe für die Stellorgane (5) der Warmetauscher (3) mittels einer im Raum frei verlegbaren Drahtverbindung (13) steckbar anschließbar sind und
i) daß die Stellorgane (5) über diese Drahtverbindung (13) betätigbar sind.

2. Regelungseinrichtung gemäß Anspruch 1, dadurch gekennzeichnet, daß das Fernbedienungsgerät (6) Regelalgorithmen für verschiedene Bauarten von Drosselorganen (5) enthält, von denen jeweils einer für die jeweils vorhandene Bauart der Drosselorgane (5) aktivierbar ist.
